# EUROPÄISCHE PATENTSCHRIFT

(11) **EP 2 809 498 B1**
(45) Veröffentlichungstag und Bekanntmachung des Hinweises auf die Patenterteilung: **20.07.2016**
(21) Anmeldenummer: 13718131.9
(22) Anmeldetag: 04.02.2013
(51) Int. Cl.: B29C 65/18, A22C 13/00, B29K 511/00, B29L 23/00, B29C 65/22, B29C 65/00

(54) **VORRICHTUNG ZUM SCHWEISSEN VON DÄRMEN**
DEVICE FOR WELDING CASINGS
DISPOSITIF DE SOUDAGE DE BOYAUX

(30) Priorität: 02.02.2012 DE 102012001924
(43) Veröffentlichungstag der Anmeldung: 10.12.2014
(73) Patentinhaber: CDS Hackner GmbH, 74564 Crailsheim (DE)
(72) Erfinder: HACKNER, Michael, 74592 Kirchberg / Jagst (DE)
(74) Vertreter: Vonnemann, Gerhard
(86) Internationale Anmeldenummer: PCT/EP2013/052179
(87) Internationale Veröffentlichungsnummer: WO 2013/113940

(56) Entgegenhaltungen:
- DE-C- 679 748
- GB-A- 645 841
- US-A- 3 799 823
- US-A1- 2004 234 655

## Beschreibung

Die Erfindung betrifft eine Vorrichtung zum Herstellen einer Hülle mit größerer Länge für Lebensmittel, insbesondere für Würste, aus einer Mehrzahl von einzelnen Hüllenabschnitten aus Därmen, welche Kollagene enthalten, wie Naturdärme oder kollagenhaltige Kunststoffdärme, umfassend einen Dorn und mindestens zwei Hüllenabschnitte, wobei die Hüllenabschnitte zum Schaffen eines überlappenden Bereichs über dem Dorn aufgeschoben und einander überlappend angeordnet sind, und mit einem Heizelement zum vorübergehenden Tauschen von Wärme zwischen Heizelement und dem überlappenden Bereich, so dass die Hüllenabschnitte im überlappenden Bereich zumindest teilweise miteinander verschweißt werden und mit einem verformbaren Dehnungskörper, wobei dieser den Dorn ringartig umgebend ausgebildet ist und innerhalb der Hüllenabschnitte angeordnet ist, wobei der verformbare Dehnungskörper aus einem elastisch verformbaren Material bestehend ausgebildet ist und mit einer den Dorn abschnittsweise umhüllenden Werkzeugform.

Zum Herstellen einer Hülle mit größerer Länge für Lebensmittel, insbesondere für Würste, aus einer Mehrzahl von einzelnen Hüllenabschnitten aus Därmen, welche Kollagene enthalten, wie Naturdärme oder kollagenhaltige Kunststoffdärme, kann ein entsprechendes Verfahren eingesetzt werden, wobei auf einem Dorn nacheinander Hüllenabschnitte aufgeschoben werden, wobei zwei einander zugewandte Endbereiche aufeinanderfolgender Hüllenabschnitte auf dem Dorn überlappen und einen überlappenden Bereich von Hüllenabschnitten bilden, wobei auf den überlappenden Bereich der beiden Hüllenabschnitte vorübergehend gleichzeitig Hitze und Druck aufgegeben werden, so dass die Hüllenabschnitte im überlappenden Bereich zumindest teilweise miteinander verschweißt werden, wobei der überlappende Bereich der beiden Hüllenabschnitte über einem verformbaren Dehnungskörper positioniert wird, wobei der Dehnungskörper vor oder beim Verschweißvorgang des überlappenden Bereichs von seinem Ausgangsdurchmesser bis zu seinem Enddurchmesser, der dem maximalen Darmkaliber des Naturdarmes entspricht, vergrößert wird und damit der überlappende Bereich ebenfalls in seinem Durchmesser vergrößert wird, und nach dem Verschweißvorgang der Dehnungskörper zu seinem Ausgangsdurchmesser zurückgefahren wird.

Ein solches Verfahren und eine Vorrichtung sind aus der europäischen Patentschrift EP 1 392 123 bekannt. Es wird bei den danach ausgeführten Anlagen ein innen auf Schweißtemperatur beheizter geteilter Metallblock als äußere einen Dehnkörper umhüllendes Schweißwerkzeug verwendet, gegen den der Dehnkörper den überlappten Naturdarm mit seiner ganzen Feuchte drückt. Damit entwickelt sich beim Schließen des Metallblocks als Werkzeugform und Weiten des Dehnkörpers eine schlagartige Hitzebelastung des Darmes, sobald dieser den Metallblock berührt und bevor der Druck vollständig aufgebaut ist. Das Restwasser wird sofort zum schlagartigen Verdampfen gebracht. Hierbei entstehen kleinste Gasblasen die platzen und das Darmgewebe beschädigen können. Dieser Dampf wird durch ein anliegendes Vakuum abgesaugt. Gewebebeschädigungen durch das Verdampfen des Wassers können jedoch nicht verhindert werden.

Die GB 645 841 A beschreibt eine solche Vorrichtung und ein Verfahren, wobei als Heizelemente Heizdrähte eingesetzt werden.

Aufgabe ist daher, eine Vorrichtung vorzuschlagen, welches eine haltbare Schweißung von Darmhüllenabschnitten schnell und sicher ermöglicht.

Die Aufgabe wird bei einer Vorrichtung zum Herstellen einer Hülle mit größerer Länge für Lebensmittel, insbesondere für Würste, aus einer Mehrzahl von einzelnen Hüllenabschnitten aus Därmen, welche Kollagene enthalten, wie Naturdärme oder kollagenhaltige Kunststoffe, umfassend einen Dorn und mindestens zwei Hüllenabschnitte, wobei die Hüllenabschnitte zum Schaffen eines überlappenden Bereichs, über dem Dorn aufgeschoben und einander überlappend angeordnet sind, und mit einem Heizelement zum vorübergehenden Tauschen von Wärme zwischen Heizelement und dem überlappenden Bereich, so dass die Hüllenabschnitte im überlappenden Bereich zumindest teilweise miteinander verschweißt werden, und mit einem verformbaren Dehnungskörper, wobei dieser den Dorn ringartig umgebend ausgebildet ist und innerhalb der Hüllenabschnitte angeordnet ist, wobei der verformbare Dehnungskörper aus einem elastisch verformbaren Material bestehend ausgebildet ist, und mit einer den Dorn abschnittsweise umhüllenden Werkzeugform, dadurch gelöst, dass als Heizelement ein Heizdraht vorgesehen ist, wobei der Heizdraht zwischen der Werkzeugform und dem überlappenden Bereich angeordnet ist.
[A1] Heizdrähte sind dünn und damit schnell aufheizbar. Ihr Aufheizen ist über den sie durchfließenden Strom kontrollierbar, so dass die Schweißung schnell und kontrolliert durchgeführt werden kann. Weil die Schweißung schnell durchgeführt wird, wird die Dampfbildung minimiert, so dass die Belastung der Hüllen verringert wird. Heizdrähte weisen eine hohe chemische Stabilität auf, so dass sie mit üblichen Reinigungsmitteln waschbar sind. Heizdrähte sind in Buchten oder Senken der Werkzeugform einklebbar, so dass die Werkzeugform mit dem Heizdraht belegbar ist. Da Heizdrähte eine vorteilhaft geringe Wärmekapazität aufweisen, kühlen sie nach dem Abschalten des Heizstromes schnell ab. Optimalerweise lassen sich Heizdrähte hervorragend für Werkzeugformen anpassen, z. B. mittels Aussparungen für Bohrungen. In Abhängigkeit der Dicke der zu verschweißenden Därme kann durch unterschiedliche Leistungsabgabe eine konstante Schweißnahtdicke geschweißt werden. Weil Heizdrähte flexibel sind, können sie in komplizierten Geometrien eingesetzt werden. Sie eignen sich damit insbesondere zum Einbringen in eine zylindrische Schweißkammer, die als teilgeschlossener Raum einen zylindrischen Dehnkörper umgibt und in dem unter Druck und Hitze Darmstücke oder Hüllen gefügt werden sollen.
[A2] Dadurch, dass zwischen Dehnungskörper und Werkzeugform eine den Dehnungskörper umschließende Schweißkammer gebildet ist, deren axiale Erstreckung mindestens der Länge des Dehnungskörpers entsprechend ausgebildet ist, ist der gesamte überlappende Bereich des Darms gegen die Werkzeugform pressbar, wünschenswerterweise gegen ein beschichtetes Gewebe in der Schweißkammer, das den direkten Kontakt des Darms mit dem Heizelement verhindert. Damit sind auf dem gesamten überlappenden Bereich Schweißnähte herstellbar. Durch das Setzen mehrerer Schweißnähte nebeneinander über den Umfang der Hülle wird die Haltbarkeit der Verbindung verbessert und die Flexibilität des nativen Darmmaterials bleibt weitgehend erhalten.
[A3] Vorteilhafterweise ist der Heizdraht von einer Trennschicht abgedeckt ausgebildet und/oder zwischen Heizdraht und Werkzeugform eine Trennschicht vorgesehen ist, wobei die Trennschicht vorzugsweise aus einem PTFE-beschichteten Gewebe besteht. Der Heizdraht wird dadurch schneller aufgeheizt und die Zykluszeit verkürzt. Da keine Aufheiz- und Abkühlzeiten für die Werkzeugmasse notwendig sind, kann die Taktung des Schweißverfahrens erhöht werden. Die Durchsatzleistung wird erhöht. Es wird auch Energie gespart, denn die Masse der Werkzeugform nimmt keine Wärme auf. Zusätzlich erleichtert die Trennschicht die Reinigung. PTFE, Teflon, weist hervorragende Trenn- und Gleiteigenschaften auf. PTFE ist beständig gegen eine Vielzahl an Chemikalien und daher für die Lebensmittelindustrie einsetzbar. Es ist reißfest und dimensionsstabil. Weil PTFE physiologisch unbedenklich ist, ist es für den Kontakt mit Lebensmitteln zugelassen. Es kann in dem für die Schweißung wichtigen Temperaturbereich bis über +200°C auf Dauer erhitzt werden.
[A4] Wünschenswerterweise ist das Heizelement, bzw. der Heizdraht oder die Heizfolie für unterschiedliche Kaliber gleich geformt ausgebildet, wobei eine Heizzone unterschiedlich lang ausgebildet und an das Kaliber angepasst ist. Unabhängig vom Durchmesser, d.h. dem Kaliber der Wursthüllenabschnitte, ist der Überlappungs- und Verbindungsbereich immer etwa gleich lang. Die Breite in Richtung des Dornes ist für alle Kaliber gleich gewählt, so dass alle Werkzeugformen unabhängig vom Kaliber einfach in die Maschine verbaut werden können. Die äußeren Abmessungen der Werkzeugform, d.h. deren Schnittstelle zur Maschine, ändern sich damit nicht. An den jeweiligen Darmkalibern sind jedoch die Dornspitze mit dem Durchmesser des Dehnkörpers und die beiden Werkzeughälften der Werkzeugform angepasst. Sobald ein anderer Kaliber geschweißt werden soll, werden diese Teile als Satz gewechselt.
[A5] Die Maßnahme, dass die Werkzeugform geteilt mit einer Trennfuge einem Spalt (29) zum Dorn ausgebildet ist, begünstigt, dass verdampftes Wasser, Öle oder Fette aus der Werkzeugform beim Schweißen leichter abgeführt werden können. Damit wird ein Überdruck in der Schweißkammer verhindert, so dass keine erhöhten Kräfte in die Werkzeugform geleitet werden. Die Wursthüllenabschnitte besitzen genügend Raum zum Anlegen in der Schweißkammer. Hüllenmaterial kann beim Ausdehnen von den Seiten nachgezogen werden.
[A6] In weiterer Ausgestaltung des Heizelementes weist dieses an seinen abgeflachten Enden Langlöcher zum Befestigen des Heizdrahtes in der Werkzeugform auf. Das Heizelement kann damit flexibel auch bei unterschiedlichen Kalibern einfach in der Werkzeugform mittels der Langlöcher verschraubt werden. Die Kontaktierung erfolgt beim Verschrauben. Die Werkzeugform ist aus elektrisch isolierendem Material gefertigt. Das Material der Werkzeugform leitet mit Vorteil auch schlecht die Wärme.
[A7] In einer weiteren Ausgestaltung ist mindestens eine Steuerung vorgesehen, die als ein Temperatursignal einen momentanen Widerstandswert des Heizdrahtes nutzend ausgebildet ist. Durch Messung des Widerstandswertes ermittelt die Steuerung die momentane Temperatur in direkter Nähe der Schweißung und erzeugt daraus ein Signal für die Taktung des Schweißvorgangs. Der Messwert kann mit einem eingestellten Sollwert verglichen werden, so dass aus der Differenz von Sollwert und Messwert ein Regelsignal abgeleitet werden kann, welches ein Verbrennen oder Verschmoren der überlappenden Wursthülsenabschnitte verhindert.
[A8] Wenn eine Werkzeugformschließeinrichtung vorgesehen ist, vorzugsweise eine selbsthaltende Werkzeugformschließeinrichtung, z.B. über einen Kniehebelmechanismus, dann wird die Arbeitssicherheit erhöht. Ein Aufspringen der geschlossenen Werkzeugform während des Schweißens ist nicht möglich, so dass für Betriebspersonal keine Gefahr von einem plötzlichen Öffnen der Werkzeugform ausgeht. Darüber hinaus ist keine aktive Haltekraft beim Verschweißen der Wursthüllenabschnitte aufzubringen.
[A9] Idealerweise ist eine Dornspitze einschließlich des Dehnungskörpers als Baugruppe ausgebildet, wobei die Baugruppe vorzugsweise als Ganzes schnell austauschbar gebildet ist. Durch diese Austauschbarkeit werden Produktionsunterbrechungen so kurz wie möglich gehalten. Die Baugruppe lässt sich schnell und zügig wechseln.
[A10] Ein Verfahren zum Herstellen einer Hülle mit größerer Länge für Lebensmittel, insbesondere für Würste, aus einer Mehrzahl von einzelnen Hüllenabschnitten aus Därmen, welche Kollagene enthalten, wie Naturdärme oder kollagenhaltige Kunststoffdärme, könnte eingesetzt werden, wobei auf einem Dorn nacheinander Hüllenabschnitte aufgeschoben werden, wobei zwei einander zugewandte Endbereiche aufeinanderfolgender Hüllenabschnitte auf dem Dorn überlappen und einen überlappenden Bereich von Hüllenabschnitten bilden, wobei auf den überlappenden Bereich der beiden Hüllenabschnitte vorübergehend gleichzeitig Hitze und Druck aufgegeben wurden, so dass die Hüllenabschnitte im überlappenden Bereich zumindest teilweise miteinander verschweißt werden, wobei der überlappende Bereich der beiden Hüllenabschnitte über einem verformbaren Dehnungskörper positioniert wird, wobei der Dehnungskörper vor oder beim Verschweißvorgang des überlappenden Bereichs von seinem Ausgangsdurchmesser bis zu seinem Enddurchmesser, der dem maximalen Darmkaliber entspricht, vergrößert wird und damit der überlappende Bereich ebenfalls in seinem Durchmesser vergrößert wird, und nach dem Verschweißvorgang der Dehnungskörper zu seinem Ausgangsdurchmesser zurückgefahren wird, wobei aus einer den Dorn umhüllenden Werkzeugform zunächst Wasser aus dem Darm gepresst wird, vorzugsweise von der Mitte aus zu beiden offenen Enden der Werkzeugform.
[A11] Optimalerweise wird das Heizelement nach dem Schließen der Werkzeugform zum Schweißen auf eine Schweißtemperatur von größer als 100°C, vorzugsweise größer als 200°C und kleiner als 220°C aufgeheizt und/oder eine Schweißtemperatur für eine voreingestellte Zeitdauer gehalten. Die Schweißtemperatur kann bei Bedarf auch geregelt werden. Damit ist es möglich, die beiden übereinanderliegenden Wursthüllenabschnitte miteinander sanft zu verschweißen. Ab einer Temperatur von 100°C werden die Wursthüllenabschnitte dabei tiefenkoaguliert, denn das Gewebe wird großflächig auf über 50°C bis 80°C erhitzt. Das Schweißen sorgt wünschenswerterweise für dichte Fügestellen. Ferner werden glatte Übergänge hergestellt, die auch ästhetischen Ansprüchen genügen. Neben dem Verschweißen der Nähte im Parallelstoß, wobei die Teile überlappend und breitflächig übereinander liegend verschweißt werden, ist ein Verschweißen als Überlappstoß oder Stumpfstoß denkbar. Beim Verbinden zweier aufeinander folgender Därme ohne Zusatz von artgleichem Werkstoff aber unter Anwendung von Druck und Hitze werden typische Bindefehler des Schweißens minimiert. Besonders vorteilhaft ist, dass zunächst der Druck aufgebaut werden kann, und dadurch das Wasser weitgehend ausgedrückt wird. In der Folge liegen die Darmenden bereits dicht aufeinander gepresst, bevor oder während die Hitze allmählich aufgebaut wird. Das allmähliche, kontrollierte Aufheizen, nachdem der Soll-Druck auf den Darmwänden aufgebaut wurde, über eine sogenannte Aufheizrampe, d.h. dem langsamen Erhöhen der Temperatur des Heizelementes, führt dazu, dass kein wesentlicher Dampf entsteht, d.h. dass somit auch keine mikroskopisch kleinen schlagartigen Verdampfungsvorgänge entstehen, die die Darmhülle schädigen. Eine Absaugung, wie im Stand der Technik notwendig, ist unnötig. Dies ist ein entscheidender Vorteil. Die Schweißnaht wird dichter, sicherer und die Randbereiche werden nicht mehr mit heißem Dampf belastet. Dadurch wird die Haltbarkeit der Naht wesentlich verbessert.
[A12] Dadurch, dass mindestens zwei parallele Schweißnähte gesetzt werden, erhöht sich die Sicherheit der Naht.
[A13] In einer weiteren Ausgestaltung des Verfahrens wird eine seitliche Begrenzung des Druckbereichs vorgenommen, um die Standzeit des Dehnkörpers zu verlängern.
[A14] In einer weiteren Ausgestaltung des Verfahrens wird der Darm vor dem Schweißen entsalzt und nach dem Schweißen leicht gesalzen und unter Zugabe einer reduzierten Lake im Vakuum verpackt und im Anschluss tiefgefroren wird.

Eine bevorzugte Ausführungsform der Erfindung wird beispielhaft an Hand von Figuren erläutert. Die Figuren zeigen im Einzelnen:
- Figur 1: ein Axialschnitt durch einen Dorn mit oberer Halbschale der Werkzeugform,
- Figur 2 a-c: eine Aufsicht auf einen Heizdraht als Folienheizelement,
- Figur 3: ein Querschnitt durch eine untere Halbschale der Werkzeugform,
- Figur 4: einen Axialschnitt durch die untere Halbschale entlang der Schnittlinie IV - IV in Figur 3,
- Figur 5: zeigt einen Dorn in einem Axialschnitt und
- Figur 6: zeigt eine Explosionsdarstellung der Schweißvorrichtung.

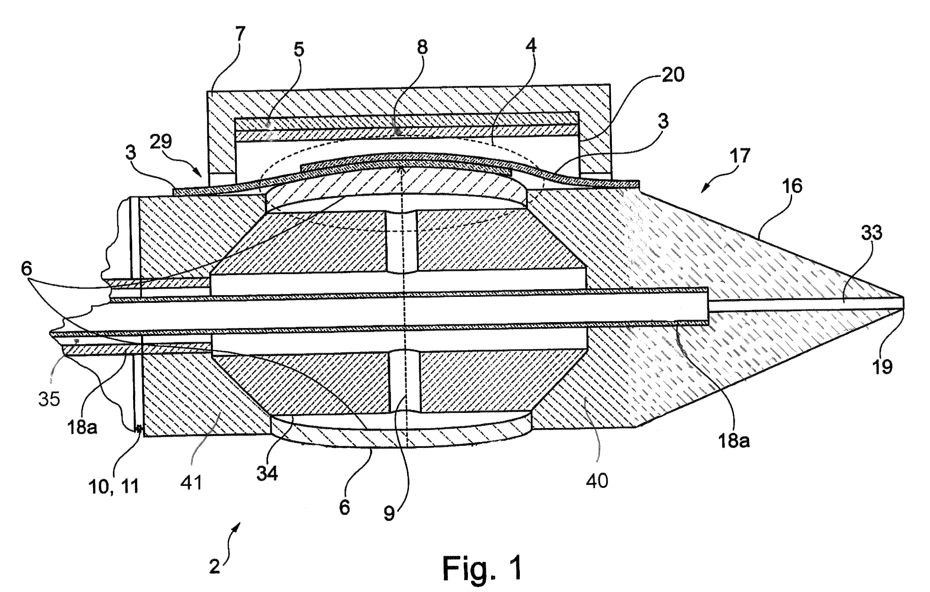

Figur 1 zeigt einen Axialschnitt durch den Dorn mit oberer Halbschale der Werkzeugform. Die untere Halbschale wurde der Übersichtlichkeit wegen nicht gezeichnet. Der Dorn 2 ist an seinem freien Enden zu einer Dornspitze 16 geformt, um die Darmhüllen leichter Aufraffen zu können. An seinem anderen Ende befindet sich eine Trennfuge 10, die die Grenze einer Baugruppe darstellt, so dass der Dorn an dieser Stelle leicht vom Rest der Lanze 39 getrennt werden kann, um den Dorn an geänderte Darmkalieber anpassen zu können. Durch den Dorn verläuft axial ein Rohr 18a zum Zuführen eine Druckmediums, z.B. von Wasser.

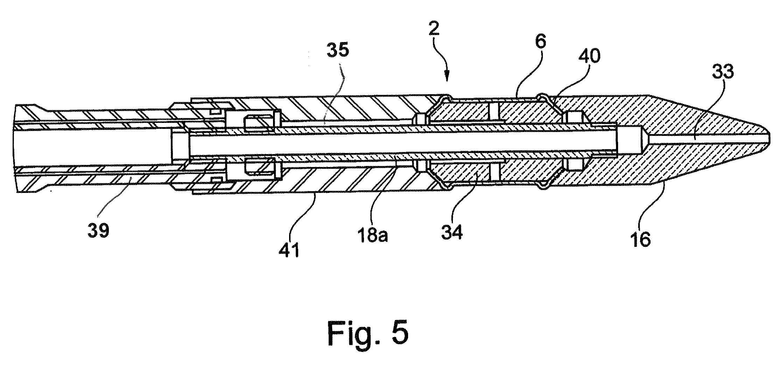

Das Rohr 18a mündet in einer Bohrung 33. Diese tritt an der Dornspitze 16 aus. Ringartig verläuft um den Blaskörper 34 ein Dehnungskörper 6. An die Dornspitze 16 schließt sich ein Abschnitt 40 (Figur 5) an, in den ein Innenkegel gesenkt ist. Radial um die Außenoberfläche des Dehnungskörpers 6 sind die Enden von zwei Wursthüllenabschnitten 3 so positioniert, dass sie sich überlappen. Der gemeinsame überlappende Bereich 4 der beiden Wursthüllenabschnitte 3 erstreckt sich vom freien Ende des unten_liegenden Wursthüllenabschnitts 3 bis zum freien Ende des oberhalb liegenden Wursthüllenabschnitts 3. Damit der überlappende Bereich 4 axial nach außen in Richtung der umhüllenden Schweißkammer 20 weg gedrückt werden kann, liegt der überlappende Bereich 4 innerhalb der Schweißkammer 20 der Werkzeugform 7. Die Werkzeugform 7 umfasst eine Trennschicht 8, welche in die Werkzeugform 7 eingelegt ist und das Heizelement 5 abgedeckt und so von dem Darmhüllenabschnitt trennt. Der Dehnungskörper 6 ist ein kurzer Schlauchabschnitt dessen Enden zwischen dem Innenkegel der Dornspitze 16, dem Abschnitt 40, und einen gleichartigen ausgeführten Innenkegel im Dornkörper 41 und einem dazwischen angeordneten Blaskörper 34 eingespannt ist.

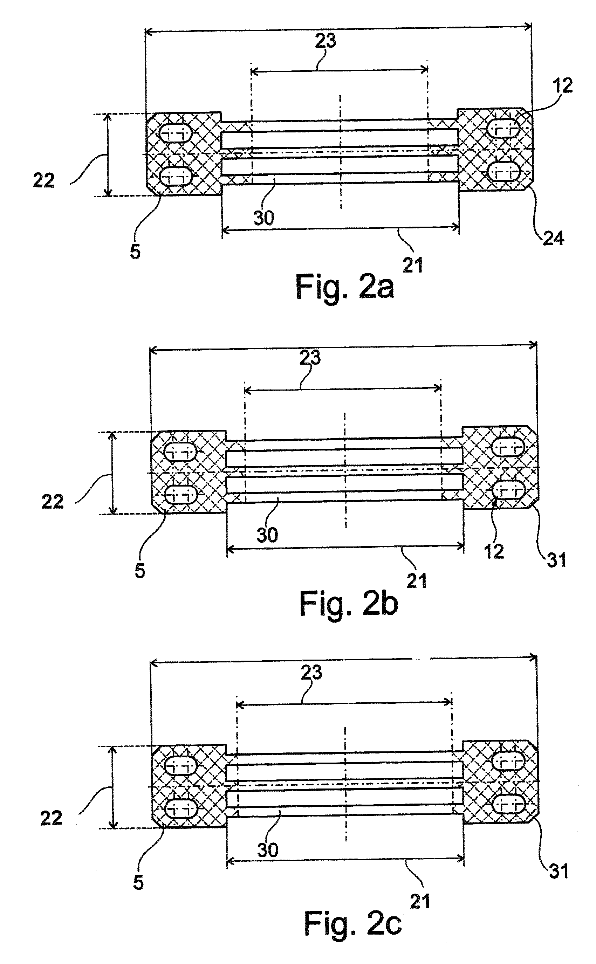

Figuren 2 a-c zeigen Heizelemente 5 in Form ausgestanzter Folien für unterschiedliche Kaliber 9 des Dorns 2. Das Kaliber 9 bezeichnet den Durchmesser der Darmhülle. Trotz unterschiedlichen Kalibers 9 ist die Länge 21 und Breite 22 der Heizelemente 5 konstant, so dass trotz unterschiedliche Kaliber 9 die Außenabmessungen gleich bleiben. Durch die Aussparungen zwischen den einzelnen Heizstreifen 30 wird die Schweißung nur im Bereich der Heizstreifen präzise und sicher ausgeführt. In die Aussparungen dazwischen bleibt natives Material des Darmhüllenabschnitts unverschweißt und kann nachfließen. Die Wärme entsteht in den Heizstreifen 30 nur im Heizbereich 23. Dieser Heizbereich ist an den jeweilig zu schweißenden Kaliber des Darms anzupassen und die Schweißung entsteht lediglich an den Stellen, wo die Darmhüllen an dem Heizbereich des Heizstreifens anliegen. In den Figuren 2 a-c sind die Heizstreifen für drei unterschiedliche Kaliberbereiche dargestellt.

Trotzdem unterschiedlicher Kaliber ist die äußere Bauform der Werkzeugform für alle Kaliber gleich. Die Heizelemente 5 weisen Langlöcher 12 auf, mittels derer die Heizelemente 5 mit der Werkzeugform 7 verschraubt oder geklemmt werden können. Dadurch, dass mindestens drei Heizstreifen 30 zwischen den zwei Klemmfahnen 31 ausgestanzt sind, verbinden sich die zwei Wursthüllenabschnitte 3 mit drei unabhängigen Schweißnähten. Die Verbindung der Wursthüllenabschnitte ist damit dreifach abgesichert und besonders stabil. Im Gegensatz zu einer Schweißfläche lassen sich die drei Heizstreifen 30 schneller aufheizen. Dadurch, dass die Außenenden der Klemmfahnen 31 mit einer Fase 24 angefast sind, lässt sich das Heizelement 5 gut in die Werkzeugform 7 einlegen. Die Klemmfahnen dienen gleichzeitig zum Kontaktieren der elektrischen Heizelemente 5.

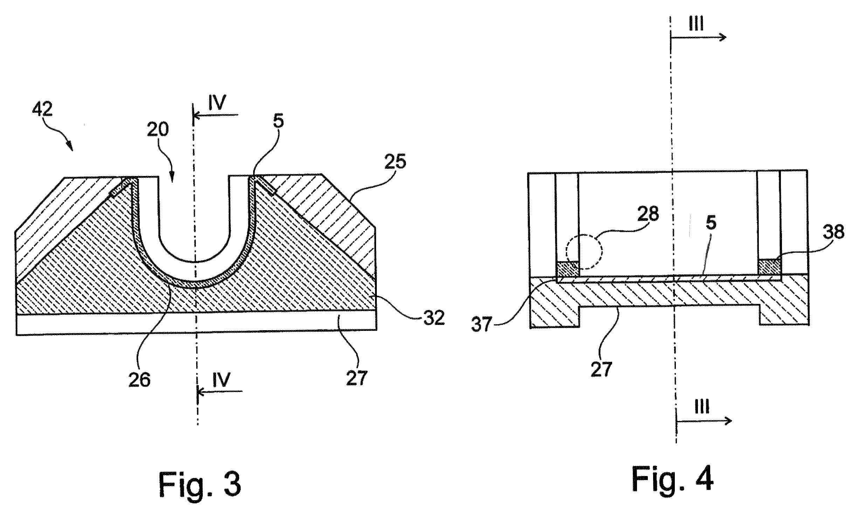

Figur 3 zeigt einen Querschnitt durch eine Halbschale 42 von insgesamt zweiender Werkzeugform 7. Im Grundkörper 32 der Halbschale 42 ist entlang des inneren Umfangs eine Nut 26 eingefräst. Der Rand 37 der Nut 26 bildet gegenüber der Nutinnenfläche einen Kragen 28, der den freien Durchmesser verengt. Ein seitliches Herausrutschen von Bauteilen aus der Nut 26 ist damit nicht möglich. In die Nut 26 ist das Heizelement 5 eingelegt- und abgedeckt mit einem teflonbeschichteten Gewebe als Trennschicht 8.

Die Klemmfahnen, die gleichzeitig Kontaktflächen sind, werden mit die Langlöcher 12 durchsetzenden Schrauben und mittels Klemmklötzen 25 mit der Werkzeugform 7 verschraubt. Die Werkzeugform ist aus elektrisch isolierendem Material, um einen Kurzschluss beim Kontaktieren zu vermeiden. Zur besseren Anlage von Heizelementen 5 und/oder Trennschicht 8 (Figur 1) in der Nut 26 werden das Heizelement 5 und die Trennschicht 8 (Figur 1) über Klemmbögen 38 in die Nut 26 gepresst, so dass die Teile passgenau in die Nut 26 gepresst werden. Je nach Wunsch ist es möglich, mehrere Trennschichten übereinander zu legen oder zu kombinieren, sowohl unter als auch über dem Heizelement 5.

In die in den Boden eingefräste Bodennut 27 der Werkzeugform 7 sind Gewindebohrungen (nicht gezeigt) zur Befestigung der Werkzeugform 7 in der Vorrichtung eingelassen. Die Seiten dieser Bodennut 27 führen die Werkzeughalbschale 42 in ihrer Aufnahme in der Maschine.

Figur 4 zeigt einen Axialschnitt durch die Werkzeugschale entlang der Schnittlinie IV - IV von Figur 3. In Figur 4 ist der Klemmbogen 38 erkennbar, welcher den Innenumfang der Nut 26, an den seitlichen Enden des Werkzeugs im Randbereich begrenzt.

Zum Verschweißen von zwei sich überlappenden Wursthüllenabschnitten 3 werden zunächst ein Wursthüllenabschnitt 3 über die Dornspitze 16 auf den Dorn 2 und das Ende innerhalb des Werkzeugbereichs positioniert. Anschließen wird das Ende des zweiten Abschnitts über dem Ende des ersten Abschnitts überlappend aufgezogen. Danach werden die Werkzeughälften an den Dorn 2 geklappt, so dass sie ihn am Umfang umhüllen und eine Schweißkammer 20 entsteht. Durch Einleiten eines Fluids durch den Ringspalt 35 (Figur 1), z.B. von Druckluft oder Druckwasser, wird der Durchmesser des Dehnungskörpers 6 und dadurch der Kaliber 9 vergrößert, so dass die überlappenden Wursthüllenabschnitte 3 zwischen Dehnkörper 6 und Heizelement 5 eingeklemmt sind. In verschlossenem Zustand liegt die Werkzeugform 7 nicht am äußeren Wursthüllenabschnitt 3 an. Zwischen der Werkzeugform 7 und den sich nicht überlappenden Bereichen der Wursthüllenabschnitte 3 ist ein Spalt 29 vorhanden. Wenn die Werkzeugform 7 geschlossen ist, kann der Dehnungskörper 6 daher entweder pneumatisch oder hydraulisch oder mechanisch gedehnt werden, so dass der sich überlappende Bereich 4 der Wursthüllenabschnitte 3 gegen die Heizstreifen 30 des Heizelementes 5 gepresst wird. Unter Druck und Hitze werden dabei die sich überlappenden Wursthüllenabschnitte 3 miteinander verschweißt.

Zunächst wird dabei Wasser aus den Wursthüllenabschnitten 3 herausgepresst, wenn sie gegen die Heizstreifen 30 gepresst werden. Das herausgepresste Wasser läuft dann durch die beiderseitigen Spalte 29 ab. Anschließend wird die Temperatur von einem Startwert so hochgeheizt bis sich die Schweißnaht ausbildet. Auf einen oder mehrere Sensoren zur Temperaturmessung und Regelung kann mit Vorteil verzichtet werden, da die Temperatur auch aus einer Widerstandsmessung des Heizelements 5 ermittelt wird. Dieses wird benutzt, um die Schweißung abzubrechen, sobald die voreingestellte Temperatur erreicht ist. Dadurch, dass die Spalte 29 Raum zum Nachfließen von Wursthüllenabschnittsmaterial geben, wird ein Abscheren der Wursthüllenschnitte an den Kanten der Schweißkammer 20 verhindert.

Die Darmhüllenabschnitte werden zunächst von Hand nach Kaliber sortiert. Zum Verschweißen von sortierten Darmhüllenabschnitten eines Kalibers werden die Därme von Hand nacheinander auf den Dorn 2 aufgezogen und verschweißt. Nach abgeschlossenem Verschweißen wird die Werkzeugform 7 wieder geöffnet, damit die miteinander verschweißten Wursthüllenabschnitte 3 weiter auf den Dorn 2 aufgezogen werden können, so dass durch Anhängen eines weiteren Wursthüllenabschnittes 3 die Länge der Wursthülle vergrößert wird. Bevor die verschweißten Wursthüllenabschnitte 3 weiter auf den Dorn aufgezogen werden, z.B. mit Hilfe des Raffrads 44 werden sie in Richtung der Dornspitze 16 vom Dorn 2 gezogen. Der Bediener presst die verschweißten Wursthüllenabschnitte 3 mit seiner Hand ab, so dass Wasser, das durch die Austrittsöffnung 19 in die verschweißten Wursthüllenabschnitte 3 geflutet wird, aufgestaut wird. Eine Prüfung der Schweißnähte durch Sichtung von Leckagen durch den Bediener ist somit möglich. Sollte kein Wasser austreten, erfüllt die Schweißung die geforderte Dichtheit.

Der Dorn 2 und die Dornspitze 16 bilden eine schnell wechselbare Baugruppe 17, die bei Bedarf, z.B. bei Verunreinigung, wechselbar ist.

Figur 5 zeigt einen Dorn 2 in einem Axialschnitt. Der Dehnungskörper 6 wird zwischen dem Blaskörper 34 und den Innenkegeln der Dornspitze 16 und des Dornkörpers 41 geklemmt.

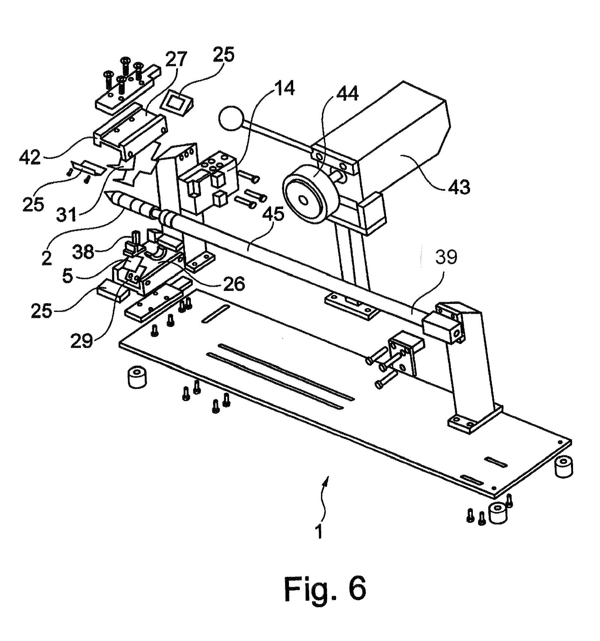

Figur 6 zeigt eine Vorrichtung 1 in einer Explosionsdarstellung. Die Lanze 39 setzt sich aus einem Lanzenkörper 45 und dem Dorn 2 zusammen. Mittels des Motors 43 wird das Raffrad 44 angetrieben. Dieses Rad unterstützt den Bediener, um verschweißte Wursthüllenabschnitte 3 auf den Lanzenkörper 45 aufzuziehen. Die Werkzeugschließeinrichtung 14 erhöht die Arbeitssicherheit.

Zum Schweißen wird bevorzugt erst Druck dann Hitze auf die Darmhüllen aufgebracht. Der Druck verdichtet das Kollagen bereits bevor die Hitze kommt und die Hitze kommt nicht schlagartig. Stattdessen erfolgt das Aufheizen allmählich.

Das beschriebene Verfahren kommt ohne Vakuumabsaugung aus. Es ist überraschender Weise schneller als die bekannten Verfahren und liefert eine wesentlich verbesserte Nahtqualität bei erhöhter Prozesssicherheit.

**Bezugsziffernliste**

| | |
|---|---|
| 1. Schweißvorrichtung | 23. Heizbereich |
| 2. Dorn | 24. Phase |
| 3. Hüllenabschnitt | 25. Klemmklotz |
| 4. überlappender Bereich | 26. Nut |
| 5. Heizelement | 27. Bodennut |
| 6. Dehnungskörper | 28. Kragen |
| 7. Werkzeugform | 29.Spalt |
| 8. Trennschicht | 30. Heizstreifen |
| 9. Kaliber | 31. Klemmfahne |
| 10. Trennfuge | 32. Grundkörper |
| 11. Spalt | 33 Bohrung |
| 12. Langlöcher | 34 Blaskörper |
| 13.- | 35 Ringspalt |
| 14.Werkzeugformschließ- | 36 - |
| einrichtung | 37 Rand |
| 15.- | 38 Klemmbogen |
| 16. Dornspitze | 39 Lanze |
| 17. Baugruppe | 40 Abschnitt |
| 18a Rohr | 41 Dornkörper |
| 19.Austrittsöffnung | 42 Halbschale |
| 20.Schweißkammer | 43 Motor |
| 21. Länge des Heizdrahtes | 44 Raffrad |
| 22. Breite | 45 Lanzenkörper |

## Patentansprüche

1. Vorrichtung (1) zum Herstellen einer Hülle mit größerer Länge für Lebensmittel, insbesondere für Würste, aus einer Mehrzahl von einzelnen Hüllenabschnitten aus Därmen, welche Kollagene enthalten, wie Naturdärme oder kollagenhaltige Kunststoffdärme, umfassend einen Dorn (2) und mindestens zwei Hüllenabschnitte (3), wobei die Hüllenabschnitte (3) zum Schaffen eines überlappenden Bereichs (4) über dem Dorn (2) aufgeschoben und einander überlappend angeordnet sind, und mit einem Heizelement (5) zum vorübergehenden Tauschen von Wärme zwischen Heizelement (5) und dem überlappenden Bereich (4), so dass die Hüllenabschnitte im überlappenden Bereich (4) zumindest teilweise miteinander verschweißt werden und mit einem verformbaren Dehnungskörper (6), wobei dieser den Dorn (2) ringartig umgebend ausgebildet ist und innerhalb der Hüllenabschnitte (3) angeordnet ist, wobei der verformbare Dehnungskörper (6) aus einem elastisch verformbaren Material bestehend ausgebildet ist und mit einer den Dorn (2) abschnittsweise umhüllenden Werkzeugform (7), **dadurch gekennzeichnet, dass** als Heizelement (5) ein Heizdraht oder eine - folie vorgesehen ist, wobei das Heizelement (5) zwischen der Werkzeugform (7) und dem überlappenden Bereich (4) angeordnet ist.

2. Vorrichtung nach Anspruch 1, **dadurch gekennzeichnet, dass** zwischen Dehnungskörper (6) und Werkzeugform (7) eine den Dehnungskörper (6) umschließende Schweißkammer (20) gebildet ist, deren axiale Erstreckung mindestens der Länge des Dehnungskörpers (6) entsprechend ausgebildet ist.

3. Vorrichtung nach Anspruch 1 oder 2, **dadurch gekennzeichnet, dass** das Heizelement (5) von einer Trennschicht (8) abgedeckt ausgebildet ist und/oder zwischen Heizdrähten (5) und Werkzeugform (7) eine Trennschicht (8) vorgesehen ist, wobei die Trennschicht (8) vorzugsweise als ein PTFE-beschichtetes Gewebe ausgebildet ist.

4. Vorrichtung nach Anspruch 1, 2 oder 3, **dadurch gekennzeichnet, dass** das Heizelement, vorzugsweise als Folienheizelement, für unterschiedliche Kaliber (9) gleich geformt ausgebildet ist, wobei eine Heizzone unterschiedlich lang ausgebildet und an das Kaliber angepasst ist.

5. Vorrichtung nach Anspruch 1, 2, 3 oder 4, **dadurch gekennzeichnet, dass** die Werkzeugform (7) geteilt mit einem Spalt (29) zum Dorn ausgebildet ist.

6. Vorrichtung nach einem oder mehreren der vorhergehenden Ansprüche, **dadurch gekennzeichnet, dass** das Heizelement (5) an seinen abgeflachten Enden (31) Langlöcher (12) zum Befestigen des Heizelementes (5) in der Werkzeugform aufweist.

7. Vorrichtung nach einem oder mehreren der vorhergehenden Ansprüche, **dadurch gekennzeichnet, dass** eine Steuerung vorgesehen ist, die als ein Temperatursignal einen momentanen Widerstandswert des Heizelementes nutzend ausgebildet ist.

8. Vorrichtung nach einem oder mehreren der vorhergehenden Ansprüche, **dadurch gekennzeichnet, dass** die Werkzeugform (7) eine Schließeinrichtung (14) aufweist, vorzugsweise eine selbsthaltende Schließeinrichtung (14).

9. Vorrichtung nach einem oder mehreren der vorhergehenden Ansprüche, **dadurch gekennzeichnet, dass** eine Dornspitze (16) einschließlich des Dehnungskörpers (6) als Baugruppe (17) ausgebildet ist, wobei die Baugruppe vorzugsweise als Ganzes schnell austauschbar ausgebildet ist.

## Claims

1. Device (1) for the production of a casing of increased length for food items, in particular for sausages, from a multiplicity of individual casing sections of gut that contains collagens, such as natural gut or collagen-containing artificial gut, comprising a mandrel (2) and at least two casing sections (3), wherein the casing sections (3) are slid over the mandrel (2) such that they create an overlapping region (4) and are disposed overlapping one another, and with a heating element (5) for the temporary exchange of heat between heating element (5) and the overlapping region (4) such that the casing sections are at least to some extent fused together in the overlapping region (4), and with a deformable expansion body (6), wherein this expansion body (6) is implemented such that it encompasses the mandrel (2) annularly and is disposed within the casing sections (3), wherein the deformable expansion body (6) is comprised of an elastically deformable material, and with a forming mold (7) sectionally enveloping the mandrel (2), **characterized in that** as the heating element (5) a heating filament or a heating foil is provided, wherein the heating element (5) is disposed between the forming mold (7) and the overlapping region (4).

2. Device as in claim 1, **characterized in that** between expansion body (6) and forming mold (7) a fusing chamber (20) encompassing the expansion body (6) is formed, whose axial extent is implemented such that it corresponds at least to the length of the expansion body (6).

3. Device as in claim 1 or 2, **characterized in that** the heating element (5) is implemented such that it is covered by a separating layer (8) and/or between heating filaments (5) and forming mold (7) a separating layer (8) is provided, wherein the separating layer (8) is preferably implemented as a PTFE-coated mesh.

4. Device as in claim 1, 2 or 3, **characterized in that** the heating element (5) is preferably implemented for different calibers (9) as an equally shaped foil heating element, wherein a heating zone is implemented of different length and adapted to the caliber.

5. Device as in claim 1, 2, 3 or 4, **characterized in that** the forming mold (7) is implemented such that it is divided with a gap (29) toward the mandrel (2).

6. Device as in one or several of the preceding claims, **characterized in that** the heating element (5) at its flattened ends (31) includes elongated holes (12) for securing the heating element (5) in the forming mold (7).

7. Device as in one or several of the preceding claims, **characterized in that** a control is provided which is implemented such that it utilizes an instantaneous resistance value of the heating element (5) as a temperature signal.

8. Device as in one or several of the preceding claims, **characterized in that** the forming mold (7) comprises a closure means (14), preferably a self-retaining closure means (14).

9. Device as in one or several of the preceding claims, **characterized in that** a mandrel tip (16) including the expansion body (6) is implemented as an assembly (17), wherein the assembly is implemented such that it can be rapidly exchanged as a whole.

## Revendications

1. Ensemble (1) de fabrication d'une enveloppe de grande longueur pour aliments, en particulier pour saucisses, à partir de plusieurs sections distinctes d'enveloppe en boyau qui contiennent du collagène, par exemple des boyaux naturels ou des boyaux synthétiques contenant du collagène, l'ensemble comprenant un mandrin (2) et au moins deux sections d'enveloppe (3), les sections d'enveloppe (3) étant enfilées sur le mandrin (2) pour former une partie en superposition (4) et étant disposées en superposition mutuelle, un élément chauffant (5) qui échange temporairement de la chaleur entre l'élément chauffant (5) et la partie (4) en superposition de telle sorte que les sections d'enveloppe soient soudées au moins en partie l'une sur l'autre dans la partie (4) en superposition et un corps déformable d'allongement (6), ce dernier entourant en anneau le mandrin (2) et étant disposé à l'intérieur des sections d'enveloppe (3), le corps déformable d'allongement (6) étant constitué d'un matériau élastiquement déformable et un moule d'outil (7) qui entoure certaines parties du mandrin (2), **caractérisé en ce que** un fil chauffant ou une feuille chauffante sont prévus comme éléments chauffants (5) et **en ce que** l'élément chauffant (5) est disposé entre le moule d'outil (7) et la partie (4) en superposition.

2. Ensemble selon la revendication 1, **caractérisé en ce qu'**une chambre de soudure (20) qui entoure le corps d'allongement (6) et dont l'extension axiale correspond au moins à la longueur du corps d'allongement (6) est formée entre le corps d'allongement (6) et le moule d'outil (7).

3. Ensemble selon les revendications 1 ou 2, **caractérisé en ce que** l'élément chauffant (5) est recouvert par une couche antiadhésive (8) et/ou **en ce qu'**une couche antiadhésive (8) est prévue entre les fils chauffants (5) et le moule d'outil (7), la couche antiadhésive (8) étant formée de préférence d'un tissu revêtu de PTFE.

4. Ensemble selon les revendications 1, 2 ou 3, **caractérisé en ce que** l'élément chauffant est de préférence formé comme élément chauffant en feuille de même forme pour différents calibres (9), une zone chauffante de longueur différente étant formée et adaptée au calibre.

5. Ensemble selon les revendications 1, 2, 3 ou 4, **caractérisé en ce que** le moule d'outil (7) est séparé du mandrin par un interstice (29).

6. Ensemble selon l'une ou plusieurs des revendications précédentes, **caractérisé en ce que** l'élément chauffant (5) présente sur ses extrémités aplaties (31) des trous oblongs (12) permettant de fixer l'élément chauffant (5) dans le moule d'outil.

7. Ensemble selon l'une ou plusieurs des revendications précédentes, **caractérisé en ce qu'**il présente une commande qui utilise comme signal de température une valeur instantanée de la résistance de l'élément chauffant.

8. Ensemble selon l'une ou plusieurs des revendications précédentes, **caractérisé en ce que** le moule d'outil (7) présente un dispositif de fermeture (14) et de préférence un dispositif de fermeture (14) autobloquant.

9. Ensemble selon l'une ou plusieurs des revendications précédentes, **caractérisé en ce que** la pointe (16) du mandrin, y compris le corps d'allongement (6), est configurée comme module (17), le module étant de préférence configuré de manière à pouvoir être remplacé rapidement en son entier.
